(19) Europäisches Patentamt
European Patent Office
Office européen des brevets

(11) Publication number: 0 220 949 A2

(12) EUROPEAN PATENT APPLICATION

(21) Application number: 86308265.7

(22) Date of filing: 23.10.86

(51) Int. Cl.[4]: C 08 G 18/14
C 08 J 9/04, B 32 B 5/20,
B 32 B 3/26

(30) Priority: 30.10.85 GB 8526707

(43) Date of publication of application: 06.05.87 Bulletin 87/19

(84) Designated Contracting States: AT BE CH DE ES FR GB IT LI NL SE

(71) Applicant: BP Chemicals Limited
Belgrave House 76 Buckingham Palace Road
London, SW1W 0SU (GB)

(72) Inventor: Brown, Michael John
BP Chemicals (Suisse) SA 243, Route des Fayards
CH-1240 Versoix (CH)

(74) Representative: Fawcett, Richard Fennelly et al
BP INTERNATIONAL LIMITED Patents Division Chertsey Road
Sunbury-on-Thames Middlesex, TW16 7LN (GB)

# (54) Polyurethane spray foams.

(57) A polyurethane foam formulation for spraying onto the side walls of moulds is provided. The polyurethane foam formulation comprises (a) a polymer polyol having a viscosity in the range of 3,000 to 8,000 cps at 25°C, (b) an isocyanate selected from toluene diisocyanate; di(4-isocyanatophenyl)methane; or derivatives thereof, (c) a catalyst for the polyurethane forming reaction comprising an amine or a tin derivative and (d) a blowing agent wherein the foam formulation has an index of from 80-120.

EP 0 220 949 A2

## Description

# POLYURETHANE SPRAY FOAMS

The present invention relates to a process for producing moulded polyurethane foamed articles using a spraying technique. In particular, the present invention relates to a process for application in the production of moulded polyurethane foamed articles comprising a plurality of foams having differing hardness.

Polyurethane foams comprising zones or layers of differing hardness or density are becoming increasingly important for use in the modern seating industry. This is particularly so in the automotive seating industry where it has recently been appreciated that such foams can reduce the overall mass of car seats, thereby improving fuel efficiency, without compromising comfort or the seats support characteristics.

Recently two alternative technologies have been developed for producing such polyurethane foams. The first of these alternatives has been described in US 4190697. This patent discloses an integral polyurethane foam comprising layers of foam having different hardness. For example, there is disclosed a seat cushion comprising a supportive lower layer of firm foam beneath more comfortable upper layer of soft foams. The patent also describes a process of making such polyurethane foams by adding a firm foam formulation to a mould, allowing the firm foam formulation to rise and adding a soft foam formulation to the rising firm foam formulation under conditions such that the soft foam formulation passes through the firm foam formulation to yield the layered structure. Preferably the soft foam formulation is added after the firm foam formulation has risen between about 10 and 80% of its potential rise.

The other alternative technology has been described in our European Patent 68820. This patent discloses a process for making an integral polyurethane foam, which comprises encapsulated zones of a firm foam in a soft foam, which is particularly suitable for producing side rolls and lumbar supports for automobile seats. The process for manufacturing such foams comprises adding first a soft foam formulation to a mould, allowing the soft foam formulation to rise and adding a firm foam formulation under conditions where the firm foam formulation does not pass through the soft foam formulation but is instead encapsulated by it. The firm foam is preferably added either (1) at a time where the soft foam formulation has expanded by an amount in the range 250% to 1400% of its original volume or (2) at between t + 3 and t + 15 (seconds t is the cream time of the soft foam formulation) after the soft foam formulation has been introduced.

Technologies such as these allow moulded seat parts, which fulfill the necessary comfort/support criteria to be produced without the need to bond together independently prepared pieces of foam or the use of support wires.

Whilst such technologies constitute an advance in the moulding of foam seating, there still remains practical problems in their use. One problem arises when it is necessary to have external areas or layers of one foam hardness on another. Whilst such areas or layers can be easily produced if they are at the bottom of the mould e.g by using the technology of US 4190697, a problem arises when it is necessary to cover the side walls of the mould as in for example the case of a hard foam trim aid on the side of a soft foam. In such cases, gravity tends to cause the foam formulations to run down the sides before the mould is filled or before curing has occurred.

An approach to solving this problem is to spray the foam formulation onto the side walls of the mould. However, conventional polyurethane foam formulations lack the viscosity and sticking power to remain adhered to the walls whilst the complete moulding occurs.

A polyurethane foam formulation has now been developed which adheres well to the side walls of moulds and is sufficiently viscous throughout its foaming that flow under the influence of gravity is kept to a miniumum. The foam formulation also adheres well to other foam formulations which may be added to the mould afterwards. The polyurethane foam formulation is therefore particularly suitable for use in spraying applications.

Accordingly the present invention provides a polyurethane foam formulation for use in spraying the side walls of moulds the polyurethane foam formulation being adapted to be sprayable onto the side walls of a mould and to be adherable thereto, characterised in that the polyurethane foam formulation comprises

(a) a polymer polyol having a viscosity in the range of 3000 to 8000 cps at 25°C.

(b) an isocyanate selected from toluene diisocyanate; di(4-isocyanatophenyl)methane; or derivates thereof.

(c) a catalyst for the polyurethane forming reaction comprising an amine or a tin derivative.

(d) a blowing agent.

wherein the foam formulation has an index between 80 and 120

As regards the polymer polyol having a viscosity in the range 3000 to 8000 cps at 25°C this is preferably one having a viscosity between 5000 and 7000 cps at 25°C. Suitably the polymer polyol is based on a polyether polyol which itself is prepared by the addition of an alkylene oxide e.g ethylene oxide and/or propylene oxide, to (1) low molecular weight diols and triols or naturally occuring polyols, (2) non reducing sugars and derivatives thereof and (3) phosphoric, phosphorus, and polyphosphoric acid. Examples of polyether polyols include the adducts formed by the addition of an alkylene oxide to ethylene glycol, propylene glycol, glycerol, the isomeric butanediols, hexanediols, octanediols and the like. Alkylene oxide adducts of pentaerythritol, sorbitol, arabitol, mannitol, alkyl glucoside, alkylene glycol glucosides and glycerol glycosides are also contemplated.

The polyether polyol may also be an amine terminated polyether polyol prepared for example by converting

the end OH groups of the polyether polyol to $NH_2$ groups using ammonia.

The polyether polyol is converted into a polymer polyol by a grafting process which comprises polymerising one or more olefinically unsaturated monomers, e.g styrene acrylonitrile, methylmethacrylate and the like, within the polyether polyol in the presence of a catalyst able to generate free radicals by radical abstraction. Preferably the polymeric matter comprises a copolymer of acrylinitrile and styrene prepared by copolymerising acrylonitrile and styrene within the polyol in the presence of a catalyst such as a peroxide, a percarbonate, a peroxydicarbonate and the like. The polymer polyols should suitably contain between 25 and 50% by weight polymer and preferably between 30% and 40% by weight polymer.

The isocyanate which is used in polyurethane foam formulation is suitably one which produces a rapid buildup in viscosity when mixed with the polyol. Suitably examples of the isocyanate are toluene diisocyanate (TDI); di(4-isocyanatophenyl)methane, known as MDI, or derivatives of these isocyanates. As regards the derivatives of TDI and MDI this includes prepolymers of TDI and/or MDI with polyols, polyether polyol, polyamines and the like.

Preferably the cure time of foam is in the range 50 to 120 secs, hence it is preferable that the foam does not flow significantly during such time intervals.

The catalyst which is used to catalyse the polyurethane forming reaction is suitably one which produces a controlled rate of viscosity increase in the initial stages of the reaction whilst providing a slow surface cure in order to provide good adhesion to soft foams produced by subsequent addition of other formulations. This is suitably achieved by using either an amine catalyst or a tin catalyst. Preferably the amine catalyst used is a tertiary amine and includes triethylamine, tributylamine, N,N'-dimethylcyclohexylamine, 1,2-dimethylimidazole, diazobicyclooctane (DABCO) N,N'-dimethylbenzylamine and the like compounds. Tertiary amines having isocyanates reactive groups e.g. triethanolamine, N-methyl-diethanolamine etc are also suitable. Preferably the tin catalyst if used is a tin ester preferably an ester of a $C_1$ to $C_{10}$ alkyl alcohol.

In addition to the above components an adhesion promoting agent may also be added such as a polyester polyol. Preferably this is added at a level in the range 2 to 10% by weight based on the total polyol used.

The blowing agent can be any of the standard ones, e.g lower hydrocarbons, halocarbons, water and the like. For most applications the preferred blowing agent is water.

To assist further in the rapid increase in viscosity, a viscosity increasing agent can optionally be added. Examples of such viscosity increasing agents include polyfunctional alcohols such as glycerol, alkanolamines and low reactivity polyfunctional amines such as di(3-chloro, 4-aminophenyl)methane. The alkanolamine can be a mono-, di- or trialkanolamine including monoethanolamine diethanolamine, triethanolamine, dipropanolamine and the like.

Preferably the viscosity increasing agent is present in amounts of less than 10% by weight based on the total formulation.

Other additives routinely used in polyurethane foam technology may also be added if desired.

The index of the polyurethane foam formulation of the present invention is between 80 and 120 and preferably in the range 105 to 120 most preferably 105 to 115. The term index is defined, for example in Kunststoff-Handbuch Vol VII, Polyurethane, published by Carl Hanser-Verlag, Munich 1966 page 441, as:

$$\text{index} = \frac{\text{amount of isocyanate (actual)}}{\text{amount of isocyanate (theoretical)}} \times 100$$

The polyurethane foam formulations of the present invention are especially useful for the formation of trim aids and the like by direct spraying into a mould of the appropriate configuration.

Accordingly, in an embodiment of the present invention there is provided a process for preparing polyurethane foam moulded parts which comprises spraying from a dosing apparatus comprising a polyurethane foam formulation mixing head onto the side walls of the mould a polyurethane foam formulation comprising (a) a polymer polyol having a viscosity in the range 3000 to 8000 cps at 25°C, (b) an isocyanate selected from toluene diisocyanate; di(4-isocyanatophenyl)methane or derivatives thereof, (c) a catalyst for the polyurethane forming reaction comprising an amine or a tin derivative, (d) a blowing agent wherein the polyurethane foam formulation has an index between 80 and 120.

The process described above is conveniently carried out by coating the side walls of the mould with either a conventional dosing apparatus modified to eject the polyurethane foam formulation as a spray or a specifically designed spray dosing apparatus. In either case the dosing apparatus should comprise a mixing head wherein the polyurethane foam formulation is prepared from its constituents. The dosing apparatus, which can be connected to a robot for ease of manipulation, may also be computer controlled where it is designed to include spraying in a more complex dosing sequence.

After the spraying has been carried out the mould may be dosed with one or more further foam formulations. If more than one foam formulation is used, the technology of either US 4190697 or EP 68820 can be employed. After the mould has been fully dosed, it is then closed and the polyurethane foam allowed to rise and cure. When curing is complete the foam part can be demoulded in the usual way.

The invention as described herein is now illustrated by the following examples.

Example 1

A polyurethane foam formulation comprising

Polymer polyol containing 35% by weight solids: 100 parts

Water (blowing agent) 1.6 parts

Catalyst (N,N'-dimethylcyclohexylamine) 2 parts

Silicone surfactant (RS-091) 0.2 parts

Glycerol 2.0 parts

Isocyanate (R1-3023-a modified MDI isocyanate) 51.4 parts

was sprayed onto the walls of a mould. The formulation adhered well to the side walls of the mould and showed little tendency to run downwards and collect in the bottom of the mould.

The polymer polyol used in this experiment had a viscosity of 7000 cps at 25°C and contained 35% by weight of an acrylonitrile/styrene copolymer. The base polyol, from which the polymer polyol was derived, was an ethylene oxide capped glycerol having a molecular weight of 5000.

Example 2

Example 1 was repeated except that glycerol was replaced by diethanolamine. The formulation also adhered well to the side walls of the mould and showed little tendency to run.

## Claims

1. A polyurethane foam formulation for use in spraying the side walls of moulds, the polyurethane foam formulation being adapted to be sprayable onto the side walls of the mould and to be adherable thereto, characterised in that the polyurethane foam formulation comprises:

(a) a polymer polyol having a viscosity in the range 3,000 to 8,000 cps at 25°C

(b) an isocyanate selected from toluene diisocyanate; di(4-isocyanatophenyl)methane or derivatives thereof

(c) a catalyst for the polyurethane forming reaction comprising an amine or tin derivative

(d) a blowing agent

wherein the foam formulation has an index between 80 and 120.

2. A polyurethane foam formulation as claimed in claim 1 wherein the viscosity of the polymer polyol is in the range 5,000 to 7,000 cps at 25°C.

3. A polyurethane foam formulation as claimed in claim 1 which further comprises a viscosity increasing agent which is either a polyfunctional alcohol, an alkanolamine or a low reactivity polyfunctional amine.

4. A polyurethane foam formulation as claimed in claim 3 wherein the viscosity increasing agent is selected from the group consisting of glycerol, monoethanolamine, diethanolamine, triethanolamine or dipropanolamine.

5. A polyurethane foam formulation as claimed in claim 1 wherein the index is between 105 and 125.

6. A polyurethane foam formulation as claimed in claim 5 wherein he index is between 105 and 115.

7. A polyurethane foam formulation as claimed in claim 1 wherein the polymer polyol contains between 30 and 40% by weight polymer.

8. A process for preparing polyurethane foam moulded parts which comprises spraying from a dosing apparatus, comprising a polyurethane foam formulation mixing head, onto the side walls of the mould a polyurethane foam formulation as defined in claim 1.